# EUROPEAN PATENT APPLICATION

(11) **EP 4 787 103 A1**
(43) Date of publication of application: **05.08.2026**
(21) Application number: 26151546.4
(22) Date of filing: 13.01.2026
(51) Int. Cl.: G05D 1/224, A01B 69/04, G05D 1/648

(54) **PATH GENERATION METHOD, PATH GENERATION PROGRAM, AND PATH GENERATION SYSTEM**

(30) Priority: 29.01.2025 JP 2025012958
(71) Applicant: Yanmar Holdings Co., Ltd., Osaka-shi, Osaka (JP)
(72) Inventor: TAKAHASHI, Mamoru, Okayama (JP); MURAYAMA, Masaaki, Okayama (JP); NISHII, Yasuto, Okayama (JP); NISHINO, Mitsuya, Okayama (JP)
(74) Representative: Isarpatent

(57) **Abstract**

[Problem] To provide a path generation method, a path generation program, and a path generation system capable of correcting the position of a target path along which to cause a work vehicle to automatically travel in a field including a work area and a non-work area.

[Solution] An automatic traveling system 100 includes a setting processing unit 211 that sets a work area in which to cause a work vehicle 10 to perform work while causing the work vehicle 10 to automatically travel, and a non-work area outside the work area, a generation processing unit 212 that generates a target path along which to cause the work vehicle 10 to automatically travel, and a correction processing unit 213 that corrects the position of the target path when a correction operation to correct the position of the target path is received.

## Description

### TECHNICAL FIELD

The present invention relates to a path generation method, a path generation program, and a path generation system for generating a path (target path) along which to cause a work vehicle to automatically travel.

### BACKGROUND ART

There has been known a work vehicle that automatically travels along a preset target path in a field. For example, there is known a system that generates a path from a start position to an end position of work before causing a work vehicle to start automatic traveling, and causes the work vehicle to automatically travel along the generated path (see, for example, Patent Document 1).

### PRIOR ART DOCUMENT

### PATENT DOCUMENT

Patent Document 1: JP-A-2018-161085

### SUMMARY OF INVENTION

### TECHNICAL PROBLEM

After the generation of a target path along which to cause a work vehicle to automatically travel, it may be desired to correct (change) the position of the generated target path. However, the conventional technique has a problem that the position of a target path set for a field including a work area and a non-work area cannot be corrected.

It is an object of the present invention to provide a path generation method, a path generation program, and a path generation system capable of correcting the position of a target path along which to cause a work vehicle to automatically travel in a field including a work area and a non-work area.

### SOLUTION TO PROBLEM

A path generation method according to the present invention is a method including setting a work area in which to cause a work vehicle to perform work while causing the work vehicle to automatically travel, and a non-work area outside the work area, generating a target path along which to cause the work vehicle to automatically travel, and correcting the position of the target path when a correction operation to correct the position of the target path is received.

A path generation program according to the present invention is a program for causing one or a plurality of processors to perform setting a work area in which to cause a work vehicle to perform work while causing the work vehicle to automatically travel, and a non-work area outside the work area, generating a target path along which to cause the work vehicle to automatically travel, and correcting the position of the target path when a correction operation to correct the position of the target path is received.

A path generation system according to the present invention includes a setting processing unit, a generation processing unit, and a correction processing unit. The setting processing unit sets a work area in which to cause a work vehicle to perform work while causing the work vehicle to automatically travel, and a non-work area outside the work area. The generation processing unit generates a target path along which to cause the work vehicle to automatically travel. The correction processing unit corrects the position of the target path when a correction operation to correct the position of the target path is received.

### ADVANTAGEOUS EFFECTS OF INVENTION

The present invention can provide a path generation method, a path generation program, and a path generation system capable of correcting the position of a target path along which to cause a work vehicle to automatically travel in a field including a work area and a non-work area.

### BRIEF DESCRIPTION OF DRAWINGS

Fig. 1 is a block diagram showing a configuration of an automatic traveling system according to an embodiment of the present invention;
Fig. 2A is an external side view showing a configuration of a work vehicle according to the embodiment of the present invention;
Fig. 2B is an external plan view showing the configuration of the work vehicle according to the embodiment of the present invention;
Fig. 3 is a diagram showing an example of a target path set in a field according to the embodiment of the present invention;
Fig. 4 is a diagram showing an example of a menu screen displayed on an operation terminal according to the embodiment of the present invention;
Fig. 5 is a diagram showing an example of an operation screen displayed on the operation terminal according to the embodiment of the present invention;
Fig. 6 is a diagram showing a state in which the work vehicle is displaced from the target path according to the embodiment of the present invention;
Fig. 7 is a diagram showing an example of an operation screen displayed on the operation terminal according to the embodiment of the present invention;
Fig. 8 is a diagram showing an example of the corrected target path according to the embodiment of the present invention;
Fig. 9A is a diagram showing a state in which the work vehicle is displaced from the target path according to the embodiment of the present invention;
Fig. 9B is a diagram showing an example of the corrected target path according to the embodiment of the present invention;
Fig. 10A is a diagram showing a state in which the work vehicle is displaced from the target path according to the embodiment of the present invention;
Fig. 10B is a diagram showing a state in which the work vehicle is displaced from the target path according to the embodiment of the present invention;
Fig. 11A is a diagram showing an example of the corrected target path according to the embodiment of the present invention;
Fig. 11B is a diagram showing an example of an operation screen displayed on the operation terminal according to the embodiment of the present invention;
Fig. 12 is a flowchart showing an example of automatic traveling processing steps performed by the automatic traveling system according to the embodiment of the present invention;
Fig. 13 is a diagram showing an example of a target path according to another embodiment of the present invention;
Fig. 14A is a diagram showing a state in which the work vehicle is displaced from the target path according to the other embodiment of the present invention;
Fig. 14B is a diagram showing an example of the corrected target path according to the other embodiment of the present invention;
Fig. 15A is a diagram showing a state in which the work vehicle is displaced from a target path according to another embodiment of the present invention;
Fig. 15B is a diagram showing an example of the corrected target path according to the other embodiment of the present invention;
Fig. 16A is a diagram showing a state in which the work vehicle is displaced from a target path according to another embodiment of the present invention;
Fig. 16B is a diagram showing an example of the corrected target path according to the other embodiment of the present invention;
Fig. 17A is a diagram showing a state in which the work vehicle is displaced from a target path according to another embodiment of the present invention;
Fig. 17B is a diagram showing an example of the corrected target path according to the other embodiment of the present invention;
Fig. 18 is a diagram showing an example of a target path correction method according to another embodiment of the present invention;
Fig. 19A is a diagram showing an example of a corrected target path according to another embodiment of the present invention;
Fig. 19B is a diagram showing an example of a method of displaying the corrected target path according to the other embodiment of the present invention;
Fig. 20A is a diagram showing an example of a corrected target path according to another embodiment of the present invention; and
Fig. 20B is a diagram showing an example of a method of displaying the corrected target path according to the other embodiment of the present invention.

### DESCRIPTION OF EMBODIMENTS

The following embodiment is an example embodying the present invention and is not intended to limit the technical scope of the present invention.

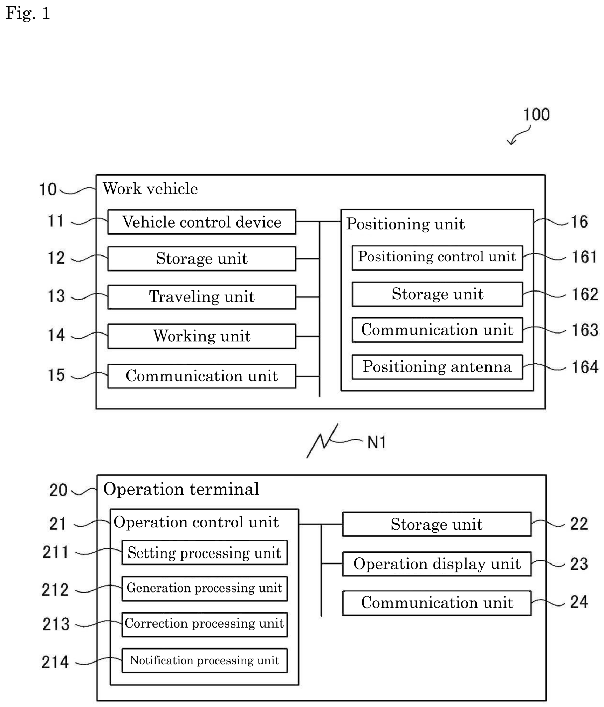

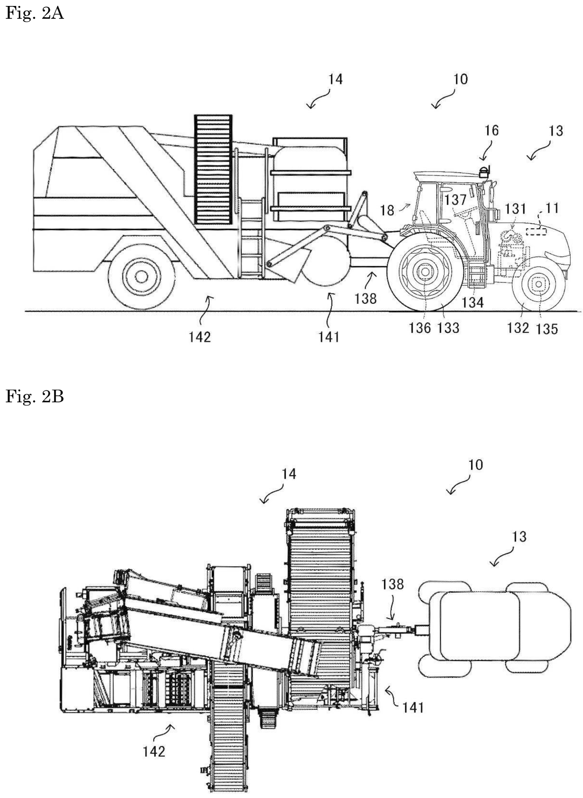

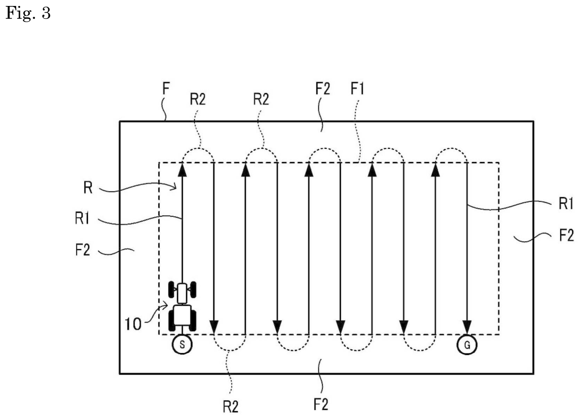

As shown in Figs. 1 and 2, an automatic traveling system 100 according to the embodiment of the present invention includes a work vehicle 10 and an operation terminal 20. The work vehicle 10 and the operation terminal 20 can communicate via a communication network N1. For example, the work vehicle 10 and the operation terminal 20 can communicate via a cellular network, a packet-switched network, or a wireless LAN. The automatic traveling system 100 is a system that can cause the work vehicle 10 to automatically travel in a field F (see Fig. 3).

A work vehicle of the present invention is a vehicle that performs specific work in the field F, such as a tractor, a combine, or a rice-planting machine. The present embodiment describes, as an example, a case where the work vehicle 10 is a vehicle (for example, a potato harvester) that harvests a crop (for example, potatoes) that is an object of work. For example, the work vehicle 10 is a towing vehicle in which a tractor travels while hauling a harvesting machine (working unit) that harvests potatoes.

The work vehicle 10 is configured to be able to automatically travel (autonomously travel) along a preset target path R (work paths R1 and turning paths R2) in the field F (see Fig. 3). For example, the work vehicle 10 can automatically travel along the target path R generated in advance for the field F, based on position information of the current position of the work vehicle 10 determined by a positioning unit 16.

The field F shown in Fig. 3 includes a work area F1 in which to cause the work vehicle 10 to perform work while causing the work vehicle 10 to automatically travel, and a non-work area F2 outside the work area. For example, in the work area F1, the work vehicle 10 harvests potatoes while traveling forward and backward in parallel along a plurality of work paths R1 from a work start position S to a work end position G. The target path R is not limited to a path shown in Fig. 3, and is appropriately set according to the shape of the field F, the type of work, and the like. The non-work area F2 is, for example, an area (headland area) around the work area F1, and is a movement area (turning area) for the work vehicle 10 to move (turn) between the work paths R1 while stopping the work. The work vehicle 10 automatically travels along the turning paths R2 in the non-work area F2. The work vehicle 10 may automatically travel (automatically steer) along the work paths R1 and manually travel (manually steer) along the turning paths R2.

The operation terminal 20 causes various types of information on the work performed by the work vehicle 10 to be displayed and receives an operation of a user (operator) to perform processing according to the operation. For example, the operator operates the operation terminal 20 to set information necessary for automatic traveling and output an automatic traveling start instruction to the work vehicle 10. The operation terminal 20 causes information on the work status, the traveling status, and the like of the work vehicle 10 in automatic traveling to be displayed. The operator can ascertain the work status and the traveling status on the operation terminal 20.

The operation terminal 20 may be mountable (detachable) on (from) the work vehicle 10. In this case, the operator can get on the work vehicle 10 and operate the operation terminal 20. For example, by getting on the work vehicle 10 and operating the operation terminal 20, the operator can switch to manual steering to manually drive the work vehicle 10 or correct (change) the position of the target path R.

### [Work vehicle 10]

As shown in Figs. 1 and 2, the work vehicle 10 includes a vehicle control device 11, a storage unit 12, a traveling unit 13, a working unit 14, a communication unit 15, the positioning unit 16, and the like. The work vehicle 10 according to the present embodiment is a potato harvester that harvests potatoes while traveling in the field F. The vehicle control device 11 is electrically connected to the storage unit 12, the traveling unit 13, the working unit 14, the positioning unit 16, and the like. The vehicle control device 11 and the positioning unit 16 may be capable of wireless communication.

The communication unit 15 is a communication interface through which the work vehicle 10 is connected to the communication network N1 by wire or radio to perform data communication in compliance with a predetermined communication protocol with external devices such as the operation terminal 20 and a base station via the communication network N1. The work vehicle 10 can wirelessly communicate with the operation terminal 20 via the communication unit 15. The work vehicle 10 can perform wireless communication of various types of information including positioning information (correction information) with the base station via the communication unit 15.

The traveling unit 13 is a drive unit that causes the work vehicle 10 to travel. As shown in Fig. 2A, the traveling unit 13 includes an engine 131, front wheels 132, rear wheels 133, a transmission 134, a front axle 135, a rear axle 136, a steering wheel 137, and the like. The front wheels 132 and the rear wheels 133 are provided on the left and right of the work vehicle 10. The traveling unit 13 is not limited to a wheel type including the front wheels 132 and the rear wheels 133, and may be of a crawler type including crawlers provided on the left and right of the work vehicle 10.

The engine 131 is a drive source such as a diesel engine or a gasoline engine driven using fuel supplied to a fuel tank (not shown). The traveling unit 13 may include an electric motor as a drive source together with the engine 131 or instead of the engine 131. A generator (not shown) is connected to the engine 131. Power is supplied from the generator to electric components such as the vehicle control device 11, a battery, and the like provided in the work vehicle 10.

The battery is charged with power supplied from the generator. The battery supplies power to electric components such as the vehicle control device 11, the positioning unit 16, and the communication unit 15.

The driving force of the engine 131 is transmitted to the front wheels 132 via the transmission 134 and the front axle 135, and is transmitted to the rear wheels 133 via the transmission 134 and the rear axle 136. The driving force of the engine 131 is also transmitted to the working unit 14 via a PTO shaft 138. When the work vehicle 10 performs automatic traveling, the traveling unit 13 performs a traveling operation according to a command from the vehicle control device 11.

The working unit 14 includes a digging and conveying device 141, a sorting device 142, and the like. As shown in Figs. 2A and 2B, the working unit 14 is connected to the vehicle body (tractor) via the PTO shaft 138. The digging and conveying device 141 is disposed so as to be able to move up and down via a hydraulic cylinder (not shown), and is configured to be able to dig with a digging unit maintained at a constant height. The digging and conveying device 141 conveys a dug crop (potatoes) and earth and sand to the sorting device 142. The sorting device 142 includes a plurality of conveyors and is configured to remove earth and sand by vibration during conveyance. On the sorting device 142, chairs on which sorting workers sit are disposed on both sides of a central portion. The sorting workers sort the crop on the conveyors.

The steering wheel 137 is an operation unit operated by the operator or the vehicle control device 11. For example, in the traveling unit 13, the angle of the front wheels 132 is changed by a hydraulic power steering mechanism (not shown) or the like in accordance with an operation of the steering wheel 137 by the vehicle control device 11, to change the traveling direction of the work vehicle 10. When the operator performs a teaching operation to record the field F, the operator operates the steering wheel 137 to manually drive the work vehicle 10. When the work vehicle 10 is moved to the work start position S, the operator operates the steering wheel 137 (manually steers) to manually drive the work vehicle 10.

In addition to the steering wheel 137, the traveling unit 13 includes a shift lever, an accelerator, a brake, and the like (not shown) operated by the vehicle control device 11. In the traveling unit 13, a gear of the transmission 134 is switched to a forward gear, a reverse gear, or the like in accordance with an operation of the shift lever by the vehicle control device 11, and a traveling mode of the work vehicle 10 is switched to a forward movement, a backward movement, or the like. The vehicle control device 11 operates the accelerator to control the rotation speed of the engine 131. The vehicle control device 11 operates the brake to brake the rotation of the front wheels 132 and the rear wheels 133 using an electromagnetic brake.

The positioning unit 16 is a communication device including a positioning control unit 161, a storage unit 162, a communication unit 163, a positioning antenna 164, and the like. For example, as shown in Fig. 2A, the positioning unit 16 is provided on top of a cabin 18 that the operator gets in. The installation place of the positioning unit 16 is not limited to the cabin 18. Further, the positioning control unit 161, the storage unit 162, the communication unit 163, and the positioning antenna 164 of the positioning unit 16 may be separately disposed at different positions on the work vehicle 10. As described above, the battery is connected to the positioning unit 16, and the positioning unit 16 can operate even while the engine 131 is stopped. The positioning unit 16 may be substituted, for example, by a mobile phone terminal, a smartphone, a tablet terminal, a quantum compass, or the like.

The positioning control unit 161 is a computer system including one or a plurality of processors and storage memory such as non-volatile memory and RAM. The storage unit 162 is non-volatile memory or the like that stores a program for causing the positioning control unit 161 to perform positioning processing, and data such as positioning information and movement information. For example, the program is non-temporarily recorded on a computer-readable recording medium such as a CD or a DVD and is read by a given reading device (not shown) and stored in the storage unit 162. Note that the program may be downloaded from a server (not shown) to the positioning unit 16 via the communication network N1 and stored in the storage unit 162.

The communication unit 163 is a communication interface through which the positioning unit 16 is connected to the communication network N1 by wire or radio to perform data communication in compliance with a predetermined communication protocol with an external device such as a base station server via the communication network N1.

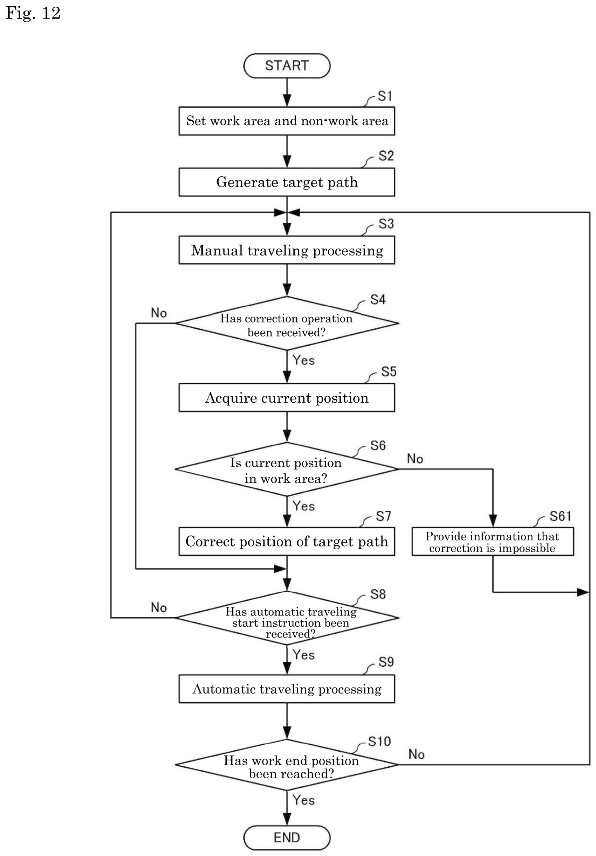

The storage unit 12 is a non-volatile storage unit such as a hard disk drive (HDD), a solid-state drive (SSD), or a flash memory that stores various types of information. The storage unit 12 stores control programs such as an automatic traveling program for causing the vehicle control device 11 to perform an automatic traveling processing (see Fig. 12). For example, the automatic traveling program is non-temporarily recorded on a computer-readable recording medium such as a CD or a DVD, and is read by a given reading device (not shown) and stored in the storage unit 12. Note that the automatic traveling program may be downloaded from a server (not shown) to the work vehicle 10 via the communication network N1 and stored in the storage unit 12. The storage unit 12 stores data of the target path R (path data) generated by the operation terminal 20.

The vehicle control device 11 includes control equipment such as a CPU, ROM, and RAM. The CPU is a processor that performs various types of arithmetic processing. The ROM is a non-volatile storage unit in which control programs such as a BIOS and an OS for causing the CPU to perform the various types of arithmetic processing are stored in advance. The RAM is a volatile or non-volatile storage unit that stores various types of information, and is used as a temporary storage memory (work area) for various types of processing performed by the CPU. The vehicle control device 11 controls the work vehicle 10 by executing, with the CPU, the various control programs stored in the ROM or the storage unit 12 in advance.

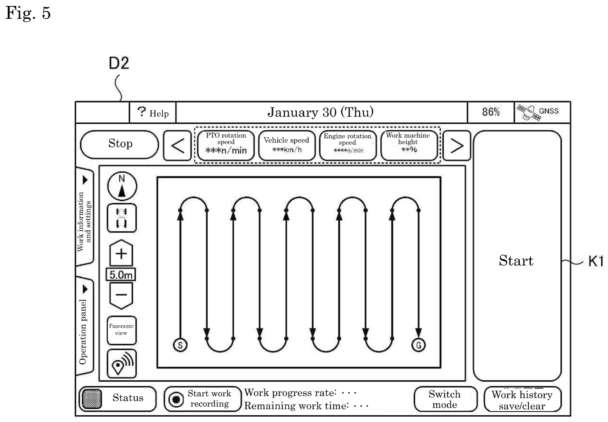

Specifically, the vehicle control device 11 causes the work vehicle 10 to automatically travel, based on position information indicating the position of the work vehicle 10 determined by the positioning control unit 161. For example, when automatic traveling start conditions are satisfied, and the operator presses a start button K1 (see Fig. 5) on the operation terminal 20, the operation terminal 20 outputs the automatic traveling start instruction to the work vehicle 10. The automatic traveling start conditions include, for example, that position determination accuracy is a predetermined value or more, the current position coincides with the work start position S, the current position is within a predetermined distance from the work start position S, the direction (orientation) of the work vehicle 10 is within a predetermined angle with respect to the target path R, and the like. Note that the automatic traveling start conditions are not limited to the above conditions.

When the automatic traveling start instruction is acquired from the operation terminal 20, the vehicle control device 11 causes the work vehicle 10 to start automatic traveling, based on the position information indicating the position of the work vehicle 10 determined by the positioning control unit 161. Consequently, the work vehicle 10 starts automatic traveling along the target path R (see Fig. 3), and starts work (for example, potato harvesting work) with the working unit 14. The target path R along which the work vehicle 10 travels is generated in advance by, for example, the operation terminal 20. The work vehicle 10 acquires the path data of the target path R from the operation terminal 20, and automatically travels along the target path R from the work start position S to the work end position G in the field F.

When an automatic traveling stop instruction is acquired from the operation terminal 20, the vehicle control device 11 causes the work vehicle 10 to stop automatic traveling. For example, when the operator presses a stop button on the operation terminal 20, the operation terminal 20 outputs the automatic traveling stop instruction to the work vehicle 10. When the automatic traveling stop instruction is acquired from the operation terminal 20, the vehicle control device 11 causes the work vehicle 10 to stop automatic traveling. Consequently, the work vehicle 10 stops automatic traveling and stops work with the working unit 14.

In the case where the operator gets on the work vehicle 10 and causes the work vehicle 10 to perform automatic traveling and work, the operation terminal 20 is installed in the cabin 18 of the work vehicle 10, and the operator can operate the operation terminal 20 in the cabin 18.

Although not shown, the work vehicle 10 may further include an obstacle sensor and a camera. The obstacle sensor is a sensor that detects obstacles in a predetermined detection area, using infrared rays, ultrasonic waves, or the like.

The camera is a digital camera that captures an image of a subject and outputs the captured image as digital image data. The camera continuously captures an image of a subject at a predetermined frame rate, generates a frame image of a predetermined resolution, and transmits the frame image to the vehicle control device 11. For example, the camera captures an image of a crop (potatoes) that is an object of work.

The vehicle control device 11 acquires measurement information from the obstacle sensor and acquires a captured image from the camera. When an obstacle is detected, the vehicle control device 11 causes the work vehicle 10 to travel, avoiding the obstacle, or to stop so as not to come into contact with the obstacle. The vehicle control device 11 outputs image data of the captured image acquired from the camera to the operation terminal 20. When the image data is acquired, the operation terminal 20 causes the captured image to be displayed on an operation screen.

### [Operation terminal 20]

As shown in Fig. 1, the operation terminal 20 is an information processing apparatus including an operation control unit 21, a storage unit 22, an operation display unit 23, a communication unit 24, and the like. The operation terminal 20 may be a mobile terminal such as a tablet terminal or a smartphone.

The communication unit 24 is a communication interface through which the operation terminal 20 is connected to the communication network N1 by wire or radio to perform data communication in compliance with a predetermined communication protocol with external devices such as one or a plurality of work vehicles 10 via the communication network N1.

The operation display unit 23 is a user interface including a display unit such as a liquid crystal display or an organic EL display that displays various types of information, and an operation unit such as a touch panel, a mouse, or a keyboard that receives operations. The operator can operate the operation unit on an operation screen displayed on the display unit to perform operations to set and register various types of information (such as work vehicle information, field information, and work information described below). Further, the operator can operate the operation unit to provide the automatic traveling start instruction, the automatic traveling stop instruction, an instruction to correct the target path R, and the like to the work vehicle 10. Furthermore, the operator can check, at a place away from the work vehicle 10, the traveling status, the work status, and the like of the work vehicle 10 automatically traveling along the target path R in the field F, using information displayed on the operation terminal 20.

The storage unit 22 is a non-volatile storage unit such as an HDD, an SSD, or a flash memory that stores various types of information. The storage unit 22 stores control programs such as an automatic traveling program for causing the operation control unit 21 to perform the automatic traveling processing (see Fig. 12). For example, the automatic traveling program is non-temporarily recorded on a computer-readable recording medium such as a CD or a DVD, and is read by a given reading device (not shown) and stored in the storage unit 22. Note that the automatic traveling program may be downloaded from a server (not shown) to the operation terminal 20 via the communication network N1 and stored in the storage unit 22.

The operation control unit 21 includes control equipment such as a CPU, ROM, and RAM. The CPU is a processor that performs various types of arithmetic processing. The ROM is a non-volatile storage unit in which control programs such as a BIOS and an OS for causing the CPU to perform the various types of arithmetic processing are stored in advance. The RAM is a volatile or non-volatile storage unit that stores various types of information, and is used as a temporary storage memory (work area) for various types of processing performed by the CPU. The operation control unit 21 controls the operation terminal 20 by executing, with the CPU, the various control programs stored in the ROM or the storage unit 22 in advance.

Specifically, as shown in Fig. 1, the operation control unit 21 includes various processing units such as a setting processing unit 211, a generation processing unit 212, a correction processing unit 213, and a notification processing unit 214. The operation control unit 21 functions as the various processing units by performing, with the CPU, various types of processing according to the control programs. Some or all of the processing units may be configured with an electronic circuit. Note that the control programs may be programs for causing a plurality of processors to function as the processing units.

The setting processing unit 211 sets various types of setting information for causing the work vehicle 10 to perform automatic traveling. Specifically, the setting processing unit 211 sets information on the work vehicle 10 (hereinafter referred to as work vehicle information). When the operator performs operations on the operation terminal 20 to register information such as the type (model) of the work vehicle 10, the position where the positioning antenna 164 is mounted on the work vehicle 10, the type of work machine, the size and shape of the work machine, the position of the work machine relative to the work vehicle 10, the vehicle speed and the engine speed during work of the work vehicle 10, and the vehicle speed and the engine speed during turning of the work vehicle 10, the setting processing unit 211 sets the information.

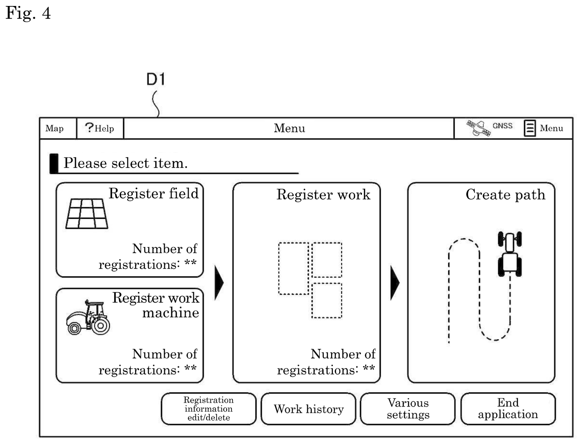

For example, the setting processing unit 211 causes the operation display unit 23 to display a menu screen D1 shown in Fig. 4. The operator selects, for example, "register work machine" on the menu screen D1 to register work machine information on the work machine. In the present embodiment, work machine information on the potato harvester as the work machine coupled to the tractor is registered.

Further, the setting processing unit 211 sets information on the field F (hereinafter referred to as field information). The setting processing unit 211 sets the work area F1 in which to cause the work vehicle 10 to perform work while causing the work vehicle 10 to automatically travel, and the non-work area F2 (headland area) outside the work area. Specifically, the setting processing unit 211 sets information such as the position and shape of the field F, the work area F1 and the non-work area F2, the work start position S at which to start work and the work end position G at which to end work, and work directions, according to the operator's operations on the operation terminal 20. The work directions mean directions in which to cause the work vehicle 10 to travel while performing work with the working unit 14 in the work area F1. For example, the operator selects "register field" on the menu screen D1 to register the field information.

Information of the position and shape of the field F can be automatically acquired, for example, when the operator gets on and drives the work vehicle 10 around the field F along its outer periphery once to record changes in position information of the positioning antenna 164 at that time. Alternatively, the position and shape of the field F may be acquired based on a polygon obtained by the operator operating the operation terminal 20 with a map displayed on the operation terminal 20 and designating a plurality of points on the map. The area specified by the acquired position and shape of the field F is an area where it is possible to cause the work vehicle 10 to travel (a travel area). The work area F1 and the non-work area F2 are set in the travel area.

Further, the setting processing unit 211 sets detailed information on how to perform work (hereinafter referred to as work information). The setting processing unit 211 is configured to be able to set, as the work information, the presence or absence of cooperative work between an unmanned work vehicle 10 and a manned work vehicle 10, the number of skips that is the number of work paths R1 to be skipped when the work vehicle 10 turns in the non-work area F2, the width of the headland, the width of a non-cultivated area, and the like. For example, the operator selects "register work" on the menu screen D1 to register the work information.

The generation processing unit 212 generates the target path R that is a path along which to cause the work vehicle 10 to automatically travel, based on the set pieces of information. The target path R is, for example, a work path from the work start position S to the work end position G (see Fig. 3). The target path R shown in Fig. 3 includes, in the field F, the work paths R1 as straight paths along which to cause the work vehicle 10 to travel forward and backward in parallel and the turning paths R2 that connect the work paths R1 to each other. The turning paths R2 may include straight paths and curved paths, or may include only curved paths. The generation processing unit 212 generates the target path R of the work vehicle 10, based on the set pieces of information set by the setting processing unit 211, and stores the target path R. For example, the operator selects "create path" on the menu screen D1 to give an instruction to generate the target path R.

After generating the target path R, the generation processing unit 212 transfers path data of the target path R to the work vehicle 10. Note that the generation processing unit 212 can generate and store a plurality of target paths R according to the type of work for a single field F.

The path data transferred from the operation terminal 20 is stored in the storage unit 12 of the work vehicle 10. Consequently, the work vehicle 10 can automatically travel along the target path R while determining the current position of the work vehicle 10 with the positioning unit 16.

The work vehicle 10 according to the present embodiment travels in the field F of a substantially rectangular shape as shown in Fig. 3. The work vehicle 10 is configured to be able to automatically travel when its current position is located in the field F, and is configured to be unable to automatically travel when its current position is located outside the field F (on a public road or the like). Further, the work vehicle 10 is configured to be able to automatically travel when the automatic traveling start conditions are satisfied.

In the case where the automatic traveling start conditions are satisfied, when the start button K1 is pressed on an operation screen D2 (see Fig. 5) of the operation terminal 20 by the operator and the automatic traveling start instruction is given, the work vehicle 10 starts automatic traveling and work (for example, potato harvesting work).

When the automatic traveling of the work vehicle 10 is permitted, the vehicle control device 11 causes the work vehicle 10 to automatically travel from the work start position S to the work end position G, based on the target path R. While the work vehicle 10 is automatically traveling, the vehicle control device 11 periodically outputs various measured values (the PTO rotation speed, the vehicle speed, the position information, and the like) to the operation terminal 20.

When the work vehicle 10 is automatically traveling, the operation control unit 21 causes map information including the field F, the target path R, the work start position S, the work end position G, and the current position of the work vehicle 10 to be displayed on the operation screen D2 (see Fig. 5). In addition to the map information, the operation control unit 21 causes function icons such as a magnification icon to change the display magnification of the map and an orientation icon to change the orientation of the map, and display icons (notification icons) to display the current statuses (measured values or the like) of items such as the driving status, the vehicle speed status, and the position status of the work vehicle 10 to be displayed on the operation screen D2.

After the generation of the target path R along which to cause the work vehicle 10 to automatically travel, it may be desired to correct (change) the position of the generated target path R. However, if the position of the target path R is allowed to be freely corrected, there arises a problem that the target path R may be generated in an area where the work vehicle 10 is not allowed to travel (for example, a headland area that is the non-work area F2). In contrast, the configuration according to the present embodiment allows the target path R along which to cause the work vehicle 10 to automatically travel to be corrected to a proper position as described below.

The operation control unit 21 is configured to correct the position of the target path R when the position (current position) of the work vehicle 10 has deviated from the target path R by a predetermined distance, before the work vehicle 10 starts automatic traveling (before the start of work or before the restart of work after the temporary stop of automatic traveling, for example).

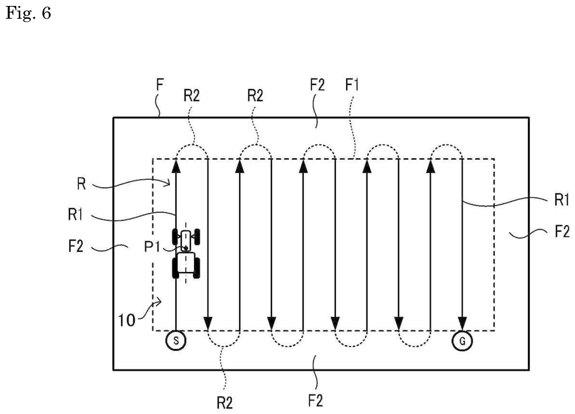

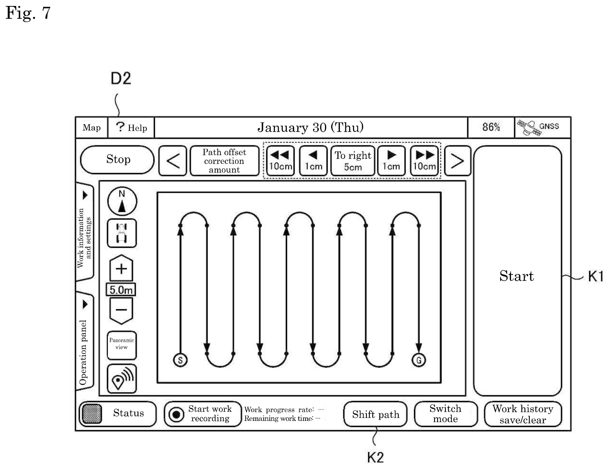

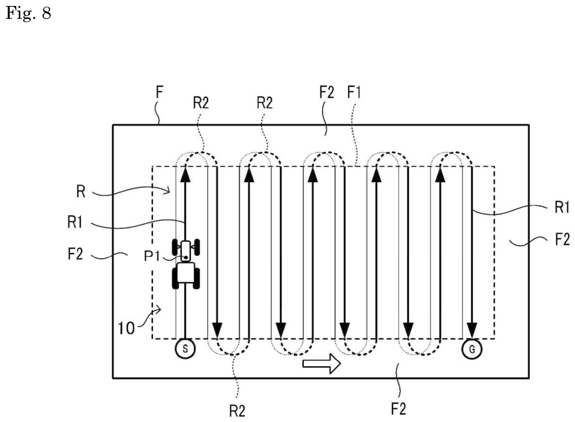

Specifically, the correction processing unit 213 corrects the position of the target path R when a correction operation to correct the position of the target path R is received in a state where the work vehicle 10 is located in the work area F1. For example, as shown in Fig. 6, in the case where the work vehicle 10 is located in the work area F1 and the current position P1 of the work vehicle 10 has deviated from one of the work paths R1 by a predetermined distance, when the operator presses a shift path button K2 (performs a correction operation) on the operation screen D2 (see Fig. 7), the correction processing unit 213 receives the correction operation. When the correction operation is received, as shown in Fig. 8, the correction processing unit 213 corrects the position of the target path R (translates the entire target path R) so that the work path R1 passes through the current position P1 of the work vehicle 10. Here, since the work vehicle 10 has deviated to the right from the target path R (work path R1), the correction processing unit 213 shifts (translates) the entire target path R to the right.

In the case where the work vehicle 10 is not located in the work area F1, that is, the work vehicle 10 is located in the non-work area F2, the correction processing unit 213 does not correct the position of the target path R even when the correction operation is received. As another embodiment, the correction processing unit 213 may disable the reception of the correction operation when the work vehicle 10 is not located in the work area F1. For example, the correction processing unit 213 may cause the shift path button K2 to be displayed in a selectable (active) state when the work vehicle 10 is located in the work area F1, and cause the shift path button K2 to be displayed in an unselectable (inactive) state (for example, grayed out) or not to be displayed when the work vehicle 10 is not located in the work area F1. Alternatively, when the correction operation is received in a state where the work vehicle 10 is not located in the work area F1, the correction processing unit 213 may cause an error message (for example, the message "Path shift is not allowed") to be displayed on the operation screen D2.

According to the above configuration, the target path R can be corrected to a position based on the current position P1 of the work vehicle 10. Since the correction of the position of the target path R (path shift) is enabled on condition that the work vehicle 10 is located in the work area F1, the target path R can be prevented from being generated in the non-work area F2.

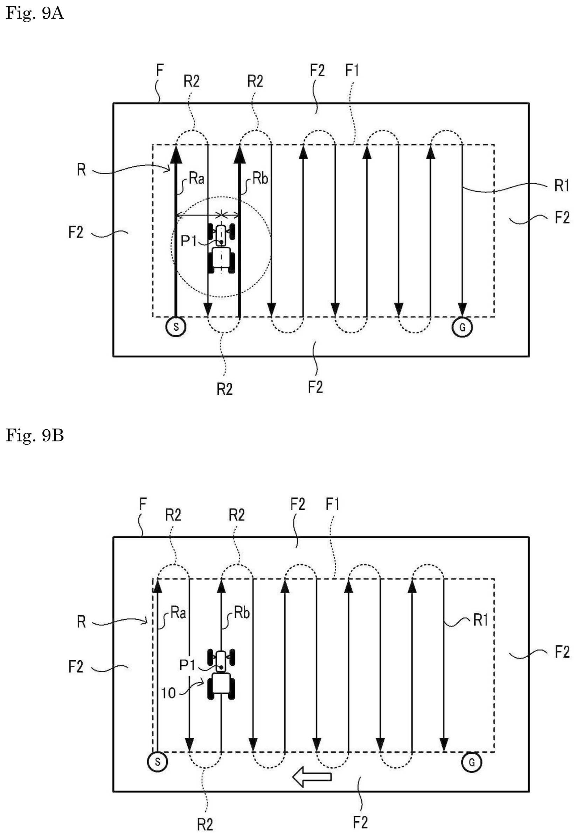

As another embodiment, the correction processing unit 213 may correct the position of the target path R so that among the plurality of work paths R1 included in the target path R, the work path R1 closest to the current position P1 of the work vehicle 10 when the correction operation is received passes through the current position P1. For example, as shown in Fig. 9A, when the current position P1 of the work vehicle 10 when the correction operation is received is closest to a work path Rb among the plurality of work paths R1, the correction processing unit 213 corrects the position of the target path R so that the work path Rb passes through the current position P1. Here, since the work vehicle 10 has deviated to the left from the work path Rb, the correction processing unit 213 shifts (translates) the entire target path R to the left as shown in Fig. 9B.

The correction processing unit 213 may correct, among the plurality of work paths R1, the position of the work paths R1 associated with traveling direction information of the same direction as the traveling direction of the work vehicle 10 when the correction operation is received. In the example shown in Fig. 9A, since the traveling direction of the work vehicle 10 is from below upward, the correction processing unit 213 identifies the work path Rb closest to the current position P1 of the work vehicle 10 from among the work paths R1 associated with traveling direction information of an upward direction, and shifts the target path R with reference to the work path Rb. Thus, the correction processing unit 213 may exclude the work paths R1 associated with traveling direction information of a direction different from the traveling direction of the work vehicle 10 from a correction (path shift) reference path.

As another embodiment, the correction processing unit 213 may correct the target path R with reference to one of the work paths R1 located within a predetermined distance from the current position P1 of the work vehicle 10. For example, as shown in Fig. 9A, the correction processing unit 213 sets a predetermined area (the area of a dotted circle in Fig. 9A) centered on the current position P1 of the work vehicle 10 when the correction operation is received, and identifies the work path R1 closest to the current position P1 among the work paths R1 included in the predetermined area. In the example shown in Fig. 9A, since work paths Ra and Rb are included in the predetermined area, the correction processing unit 213 identifies the work path Rb closest to the current position P1 between the work paths Ra and Rb, and corrects the position of the target path R so that the work path Rb passes through the current position P1. The predetermined area may be set according to the operator's operation, or may be automatically set based on information such as the type of work and the set vehicle speed.

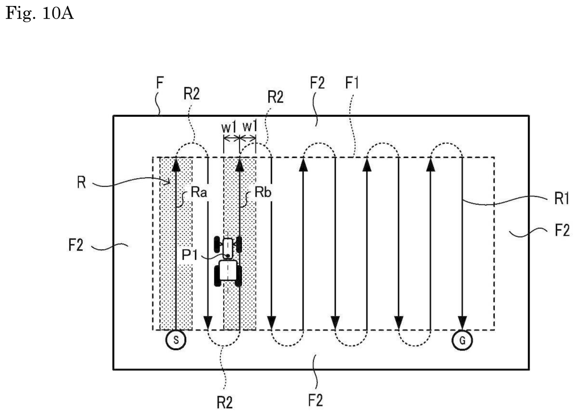

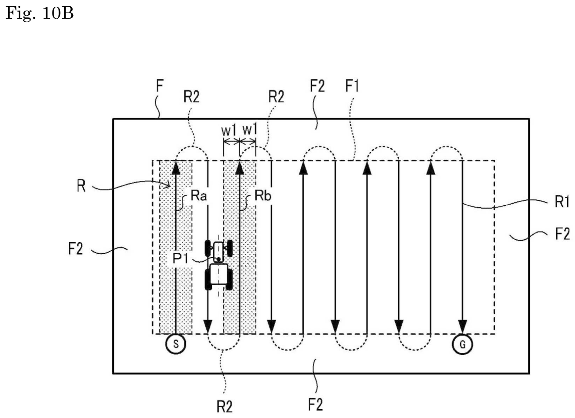

The correction processing unit 213 may set a limit (upper limit) on the amount of correction (shift amount or shift width) of the target path R. For example, the correction processing unit 213 sets a length of half the working width of the work vehicle 10 as the upper limit of the amount of correction of the target path R (an upper limit correction width w1). In this case, for example, as shown in Fig. 10A, when the current position P1 of the work vehicle 10 is within the upper limit correction width w1 from the work path Rb (the amount of displacement of the work vehicle 10 is within the upper limit correction width w1), the correction processing unit 213 enables the correction (path shift) of the target path R. On the other hand, as shown in Fig. 10B, when the current position P1 of the work vehicle 10 is outside the upper limit correction width w1 from the work path Rb, the correction processing unit 213 disables the correction (path shift) of the target path R. The upper limit correction width w1 may be set according to the operator's operation, or may be automatically set based on information such as the type of work and the set vehicle speed. Thus, the correction processing unit 213 may correct the position of the target path R within the preset upper limit when the correction operation is received from the operator.

As described above, the correction processing unit 213 is configured to correct the position of the target path R (shift the path) when a correction operation (path shift operation) to correct the position of the target path R is received from the operator in a state where the work vehicle 10 is located in the work area F1. When the operator presses the start button K1 after the position of the target path R is corrected, the work vehicle 10 starts automatic traveling along the corrected target path R.

The notification processing unit 214 causes predetermined information to be provided when an error occurs in the position correction (path shift) of the target path R. Specifically, the notification processing unit 214 causes predetermined information to be provided when the correction of the position of the target path R prevents the work vehicle 10 from automatically traveling at at least any position in the target path R.

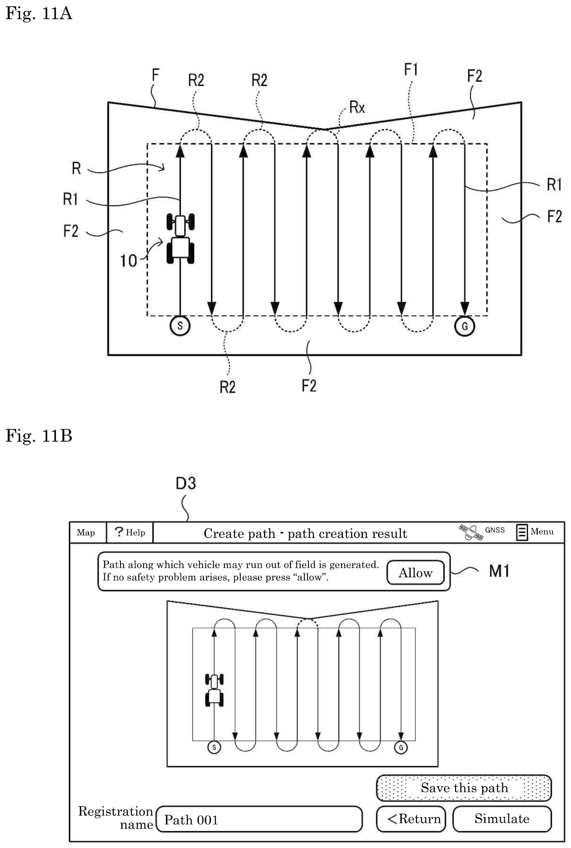

For example, in an example shown in Fig. 11A, in the case where the shape of the field F is an irregular shape, if the position of the target path R is corrected, a certain turning path Rx approaches the boundary of the field F, and the work vehicle 10 runs out of the field F when traveling along the turning path Rx. When the correction of the position of the target path R thus prevents the work vehicle 10 from automatically traveling along the turning path Rx, as shown in Fig. 11B, for example, the notification processing unit 214 causes an error message M1 to be displayed on an operation screen D3 at the time of path creation. The notification processing unit 214 may cause an allow button to receive an instruction to allow the corrected target path R to be displayed in the error message M1. When the operator presses the allow button, the generation processing unit 212 stores the corrected target path R. The notification processing unit 214 may identifiably display (highlight) the turning path Rx on the operation screen D3. Further, when the error occurs, the generation processing unit 212 may create an alternative path along which the work vehicle 10 can travel and present the alternative path on the operation screen D3.

The operation terminal 20 may be able to access a website of an agricultural support service (an agricultural support site) provided by a server (not shown) via the communication network N1. In this case, the operation terminal 20 can function as an operation terminal of the server when the operation control unit 21 executes a browser program. Then, the server includes the above-described processing units and performs the pieces of processing.

### [Automatic traveling processing]

Hereinafter, with reference to Fig. 12, an example of the automatic traveling processing performed by the automatic traveling system 100 will be described.

The present invention can be considered as an invention of an automatic traveling method to perform one or more steps included in the automatic traveling processing. One or more steps included in the automatic traveling processing described here may be omitted as appropriate. Steps in the automatic traveling processing may be performed in a different order as long as the same operational effect is achieved. Furthermore, here, a case where the vehicle control device 11 and the operation control unit 21 perform the steps in the automatic traveling processing will be described as an example. An automatic traveling method in which one or a plurality of processors perform the steps in the automatic traveling processing in a distributed manner is also considered as another embodiment.

### <Step S1>

In step S1, the operation control unit 21 sets the work area F1 and the non-work area F2. Specifically, the operation control unit 21 sets information such as the position and shape of the field F, the work area F1 and the non-work area F2, the work start position S at which to start work and the work end position G at which to end work, and work directions, according to the operator's operations (see Fig. 3).

### <Step S2>

In step S2, the operation control unit 21 generates the target path R for automatic traveling. Specifically, the operation control unit 21 generates the target path R along which to cause the work vehicle 10 to automatically travel, based on the pieces of information set in step S1. For example, as shown in Fig. 3, the operation control unit 21 generates the target path R including the work paths R1, which are a plurality of parallel forward and backward paths, and the turning paths R2 connecting the work paths R1 to each other from the work start position S to the work end position G. The work paths R1 are set in the work area F1, and the turning paths R2 are set in the non-work area F2.

### <Step S3>

In step S3, the vehicle control device 11 causes the work vehicle 10 to manually travel according to the operator's manual steering. For example, the operator manually drives the work vehicle 10 to a place at which to start work.

### <Step S4>

In step S4, the operation control unit 21 determines whether or not a correction operation to correct the position of the target path R has been received from the operator. For example, the operation control unit 21 determines whether or not the operator has pressed the shift path button K2 (has performed the correction operation) on the operation screen D2 (see Fig. 7). When the correction operation by the operator is received (S4: Yes), the operation control unit 21 causes the process to proceed to step S5. On the other hand, when the correction operation by the operator is not received (S4: No), the operation control unit 21 causes the process to proceed to step S8. The operator presses the shift path button K2 when, for example, the operator wants to move the position of the target path R to the current position P1 of the work vehicle 10 (shift the path) to start automatic traveling.

### <Step S5>

In step S5, the operation control unit 21 acquires the current position P1 of the work vehicle 10. Specifically, the operation control unit 21 acquires the current position P1 of the work vehicle 10 when the correction operation is received from the operator.

### <Step S6>

In step S6, the operation control unit 21 determines whether or not the current position P1 of the work vehicle 10 is in the work area F1. That is, the operation control unit 21 determines whether the current position P1 of the work vehicle 10 when the correction operation is received from the operator is in the work area F1 or in the non-work area F2. When the operation control unit 21 determines that the current position P1 of the work vehicle 10 is in the work area F1 (S6: Yes), the operation control unit 21 causes the process to proceed to step S7. On the other hand, when the operation control unit 21 determines that the current position P1 of the work vehicle 10 is not in the work area F1 (is in the non-work area F2) (S6: No), the operation control unit 21 causes the process to proceed to step S61.

### <Step S7>

In step S7, the operation control unit 21 corrects the position of the target path R. Specifically, when the correction operation is received from the operator (see Fig. 7) in a state where the work vehicle 10 is displaced to the right from one of the work paths R1 in the work area F1 (see Fig. 6), the operation control unit 21 translates (shifts) the entire target path R to the right so that the work path R1 passes through the current position P1 of the work vehicle 10 as shown in Fig. 8.

### <Step S8>

In step S8, the operation control unit 21 determines whether or not the automatic traveling start instruction has been received. When the operator presses the start button K1 on the operation screen D2 (see Fig. 7), the operation control unit 21 outputs the automatic traveling start instruction to the work vehicle 10. The vehicle control device 11 acquires the automatic traveling start instruction from the operation terminal 20.

When the start button K1 is pressed by the operator, the operation control unit 21 outputs path data of the corrected target path R to the work vehicle 10. The vehicle control device 11 acquires the path data of the corrected target path R together with the automatic traveling start instruction. When the automatic traveling start instruction is received, the vehicle control device 11 switches a traveling mode from manual traveling to automatic traveling.

When the automatic traveling start instruction is received (S8: Yes), the vehicle control device 11 causes the process to proceed to step S9. On the other hand, when the automatic traveling start instruction is not received (S8: No), the vehicle control device 11 causes the process to proceed to step S3. The vehicle control device 11 continues manual traveling processing until the automatic traveling start instruction is received.

### <Step S9>

In step S9, the vehicle control device 11 starts automatic traveling processing. Specifically, the vehicle control device 11 causes the work vehicle 10 to start automatic traveling along the target path R generated by the operation terminal 20 (see Fig. 3) or the corrected target path R (see Fig. 8). In addition, the vehicle control device 11 causes work with the working unit 14 to be started in the work area F1.

### <Step S10>

Next, in step S10, the vehicle control device 11 determines whether or not the work vehicle 10 has reached the work end position G (see Figs. 3 and 8). When the vehicle control device 11 determines that the work vehicle 10 has reached the work end position G (S10: Yes), the vehicle control device 11 completes the automatic traveling processing. When the vehicle control device 11 determines that the work vehicle 10 has not reached the work end position G (S10: No), the vehicle control device 11 causes the process to proceed to step S3. Returning to step S3, the vehicle control device 11 causes the work vehicle 10 to manually travel when a manual traveling instruction is received from the operator, and continues automatic traveling and proceeds to step S4 when the manual traveling instruction is not received.

### <Step S61>

In step S61, the operation control unit 21 rejects the position correction of the target path R (path shift) and provides information indicating that the position correction is impossible. For example, the operation control unit 21 causes the shift path button K2 to be displayed in an unselectable state (for example, grayed out) or hidden on the operation screen D2 (see Fig. 7), and causes an error message (for example, the message "Path shift is not allowed") to be displayed on the operation screen D2. After step S61, the operation control unit 21 causes the process to proceed to step S3. Thus, when an operation to correct the position of the target path R is received from the operator (S4: Yes), the operation control unit 21 enables the position correction of the target path R (S7) when the current position P1 of the work vehicle 10 is located in the work area F1 (S6: Yes), and disables the position correction of the target path R (S61) when the current position P1 of the work vehicle 10 is located outside the work area F1 (S6: No).

The operation control unit 21 and the vehicle control device 11 repeatedly perform the above-described process until the work vehicle 10 reaches the work end position G (S10: No). Thus, the automatic traveling system 100 performs the automatic traveling processing.

As described above, the automatic traveling system 100 according to the present embodiment performs setting the work area F1 in which to cause the work vehicle 10 to perform work while causing the work vehicle 10 to automatically travel, and the non-work area F2 outside the work area F1, generating the target path R along which to cause the work vehicle 10 to automatically travel, and correcting the position of the target path R when a correction operation to correct the position of the target path R is received in a state where the work vehicle 10 is located in the work area F1.

For example, the automatic traveling system 100 corrects the position of the target path R so that among the plurality of work paths R1 included in the target path R, the work path R1 closest to the current position P1 of the work vehicle 10 when the correction operation is received passes through the current position P1 (see Fig. 8). The automatic traveling system 100 causes predetermined information (the error message M1 in Fig. 11B) to be provided when the correction of the position of the target path R prevents the work vehicle 10 from automatically traveling at at least any position in the target path R.

According to the above configuration, the target path R can be shifted to a position based on the current position P1 of the work vehicle 10. Since the correction of the position of the target path R (path shift) is enabled on condition that the work vehicle 10 is located in the work area F1, the target path R can be prevented from being generated in the non-work area F2.

### [Other embodiments]

The present invention is not limited to the above-described embodiments. Other embodiments of the present invention will be described below.

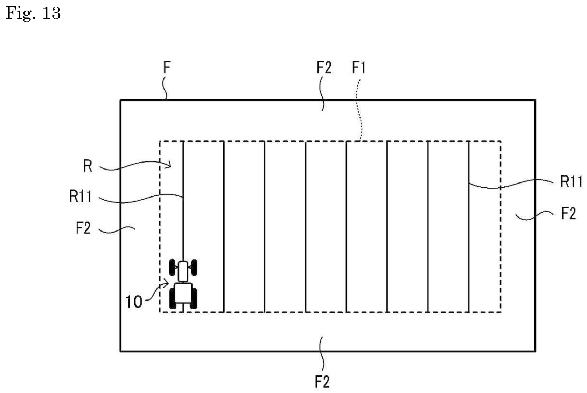

In the above-described embodiments, the operation control unit 21 is configured to correct (shift) the position of the entire target path R when the correction operation is received from the operator. As another embodiment, the operation control unit 21 may be configured to correct (shift) the position of a specific one of the work paths R1 of the target path R when the correction operation is received from the operator. Specifically, the operation control unit 21 corrects the position of a specific one of the work paths R1 that satisfies a predetermined condition among the plurality of work paths R1 included in the target path R. The following describes a specific example of the above configuration. The following describes a case where, as shown in Fig. 13, the target path R consists of only a plurality of work paths R11 (straight paths) as an example. That is, the work vehicle 10 automatically travels straight along the work paths R11, and at the time of turning, travels in a turning movement according to the operator's manual steering. However, also in the following configuration, the target path R may include turning paths, and the work vehicle 10 may automatically travel along the work paths and the turning paths.

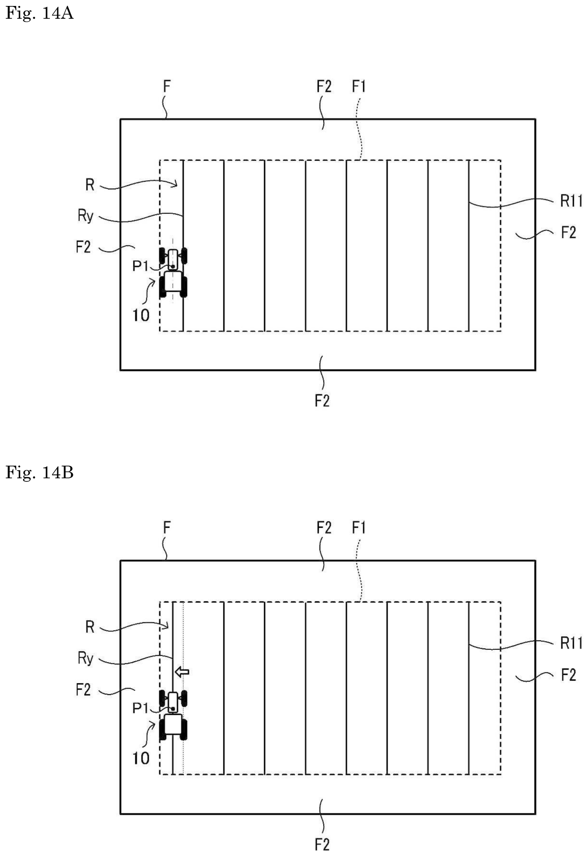

For example, as shown in Fig. 14A, the operation control unit 21 corrects the position of a specific work path Ry of the target path R when the correction operation is received from the operator in a state where the work vehicle 10 is located in the work area F1 and the current position P1 of the work vehicle 10 is displaced from the target path R. Here, as shown in Fig. 14B, the operation control unit 21 corrects, among the plurality of work paths R11, the position of only the work path Ry closest to the current position P1 of the work vehicle 10 when the correction operation is received. The operation control unit 21 does not correct the position of the other work paths R11 except the work path Ry.

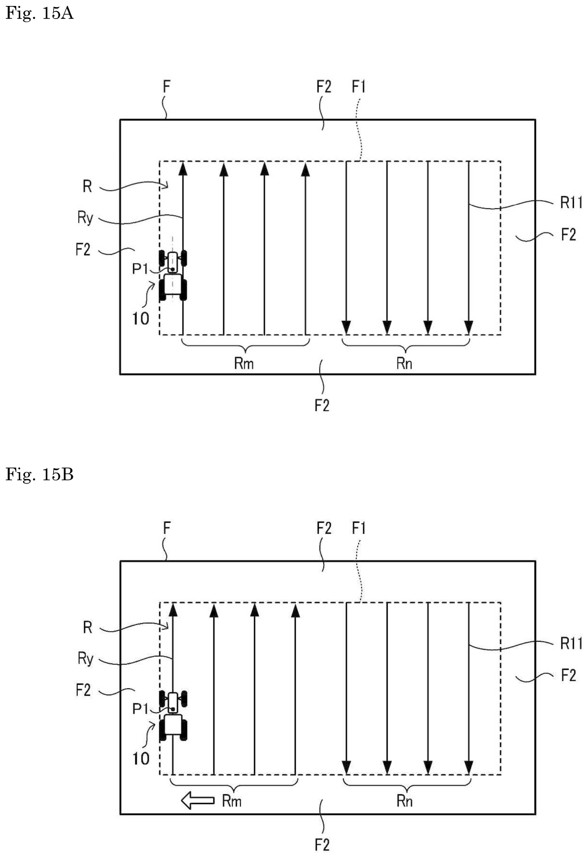

As another embodiment, the operation control unit 21 may correct, among the plurality of work paths R11, the position of the work paths R11 associated with traveling direction information of the same direction as the traveling direction of the work vehicle 10 when the correction operation is received. For example, in the target path R shown in Fig. 15A, work paths Rm are associated with traveling direction information of a direction from below upward, and work paths Rn are associated with traveling direction information of a direction from above downward. The operation control unit 21 corrects the position of only the work paths Rm when the traveling direction of the work vehicle 10 at the time of receiving the correction operation in a state where the work vehicle 10 is located in the work area F1 is the direction from below upward. Here, as shown in Fig. 15B, the operation control unit 21 shifts (translates) the position of all the work paths Rm to the left, and does not correct the position of the work paths Rn.

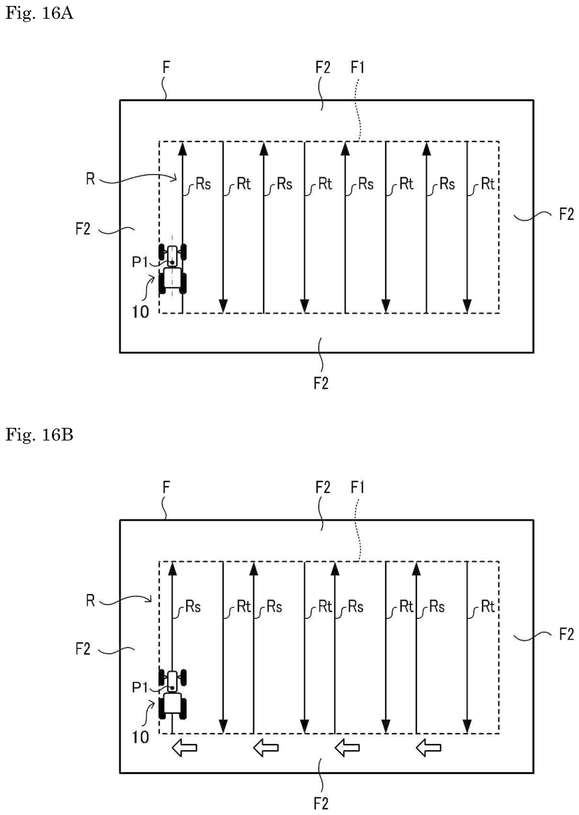

As another example, in the case where, as shown in Fig. 16A, the traveling direction changes alternately at each work path in the target path R, as shown in Fig. 16B, the operation control unit 21 corrects the position of only work paths Rs in the same direction as the traveling direction of the work vehicle 10 when the correction operation is received in a state where the work vehicle 10 is located in the work area F1, and does not correct the position of work paths Rt in a different traveling direction.

As still another embodiment, the operation control unit 21 may correct, among the plurality of work paths R11, the position of the work path R11 that is closest to the current position P1 of the work vehicle 10 when the correction operation is received, and is associated with traveling direction information of the same direction as the traveling direction of the work vehicle 10 when the correction operation is received. That is, the operation control unit 21 may correct the position of a specific one of the work paths R11 based on the work path R11 closest to the current position P1 of the work vehicle 10 among the work paths R11 associated with traveling direction information of the same direction as the traveling direction of the work vehicle 10 when the correction operation is received.

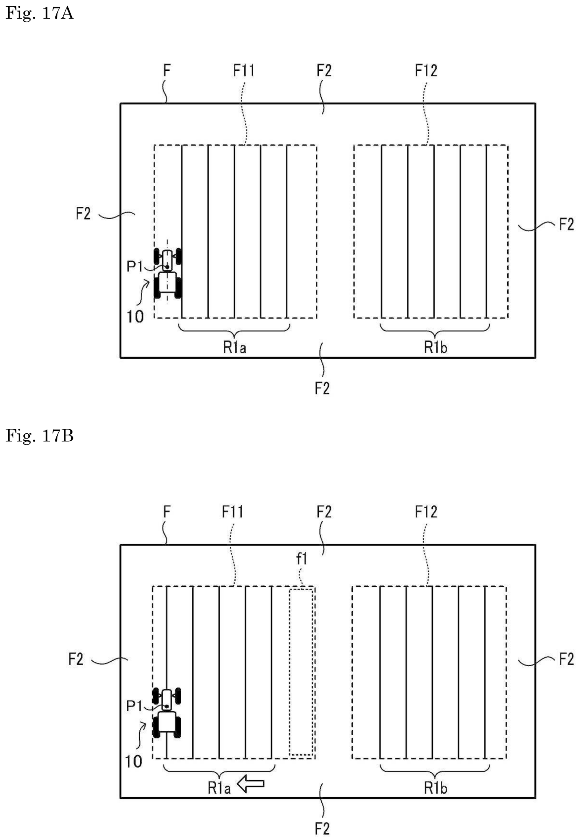

As still another embodiment, the work area F1 may include a plurality of work areas in which different target paths are generated. For example, as shown in Fig. 17A, work areas F11 and F12 may be set in the field F, a target path R1a may be set in the work area F11, and a target path R1b may be set in the work area F12. In this case, as shown in Fig. 17B, the operation control unit 21 corrects the position of the target path R1a corresponding to the work area F11 where the work vehicle 10 is located when the correction operation is received. The operation control unit 21 does not correct the position of the target path R1b corresponding to the work area F12 where the work vehicle 10 is not located when the correction operation is received.

In the case where the correction of the position of the target path R1a results in the generation of an unworked area f1 in the work area F11, the operation control unit 21 may generate a work path r1 along which to cause the work vehicle 10 to travel in the unworked area f1. For example, as shown in Fig. 17B, when the unworked area f1 is generated at the right edge of the work area F11 by shifting the target path R1a to the left, the operation control unit 21 may additionally generate one or a plurality of work paths r1 in the unworked area f1. However, the work path(s) r1 may not need to be added, depending on the type of work. Thus, the operation control unit 21 may determine whether or not to generate the work path(s) r1 in the unworked area f1, based on the type of work (work information). For example, the operation control unit 21 additionally generates the work path(s) r1 in the unworked area f1 when the type of work is tilling work, and does not generate the work path(s) r1 in the unworked area f1 when the type of work is ridging (when the number of ridges is predetermined).

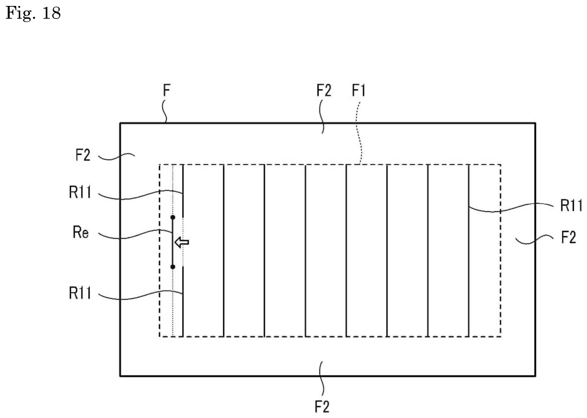

As still another embodiment, the operation control unit 21 may correct only the position of a partial section between the start point and end point of one of the work paths R11. For example, as shown in Fig. 18, the operation control unit 21 may move only a partial section Re in the middle of one of the work paths R11 to a position passing through the current position P1 of the work vehicle 10. For example, when the operator specifies the section end point, the operation control unit 21 moves the section Re between the current position P1 of the work vehicle 10 and the specified end point so as to make it pass through the current position P1.

In each of the above-described embodiments, the operation control unit 21 is configured to translate the position of the target path R so as to make it coincide with the current position P1 of the work vehicle 10 according to the correction operation. As another embodiment, the operation control unit 21 may be configured to correct the orientation of the target path R so as to make it coincide with the current orientation of the work vehicle 10 according to the correction operation. That is, the operation control unit 21 may correct the orientation of the target path R (shift the path angle) when a correction operation to correct the position of the target path R is received in a state where the work vehicle 10 is located in the work area F1. Specifically, the operation control unit 21 corrects the orientation of the target path R so that among the plurality of work paths R1 included in the target path R, the orientation of the work path R1 closest to the current position P1 of the work vehicle 10 when the correction operation is received coincides with the current orientation of the work vehicle 10. The operation control unit 21 may correct the position and orientation of the target path R so that the work path R1 closest to the current position P1 of the work vehicle 10 when the correction operation is received passes through the current position P1 of the work vehicle 10, and the orientation of the work path R1 coincides with the current orientation of the work vehicle 10. The operation control unit 21 may correct the orientation of the entire target path R, or may correct the orientation of only some of the work paths R1.

In each of the above-described embodiments, in the case where the position of some of the work paths R1 of the target path R is corrected, the distance between the work paths R1 varies, and thus it is necessary to correct the turning paths R2 connecting the work paths R1 to each other. Therefore, the operation control unit 21 may correct the turning paths R2 according to the correction of the position of the work paths R1. Specifically, in the case where the operator has set a turning method in advance, the operation control unit 21 corrects the turning paths R2 while maintaining the turning method. If a turning method set by the operator prevents the turning paths R2 from being corrected, the operation control unit 21 may prompt the operator to perform an operation to change the turning method.

In each of the above-described embodiments, when the target path R is corrected, the operation control unit 21 may store path data of the corrected target path R. For example, the operation control unit 21 stores the path data of the corrected target path R associated with the field F, the type of work, and the like in the storage unit 22. This allows the operator to select the past corrected target path R to perform work at next work time.

In each of the above-described embodiments, the correction processing unit 213 is configured to correct the position of the target path R when a correction operation to correct the position of the target path R is received in a state where the work vehicle 10 is located in the work area F1. As another embodiment, the correction processing unit 213 may correct the position of the target path R even when the correction operation is received in a state where the work vehicle 10 is located in the non-work area F2. That is, the present invention may correct the position of the target path R according to the correction operation regardless of the current position of the work vehicle 10.

Further, the correction processing unit 213 may exclude, among the plurality of work paths R1 included in the target path R, a work path Rg that becomes located in the non-work area F2 when the position of the target path R is corrected, from the path along which automatic traveling is performed. That is, when the correction operation is received, the correction processing unit 213 generates the target path R only with the work paths R1 located in the work area F1 among the plurality of work paths R1 after position correction.

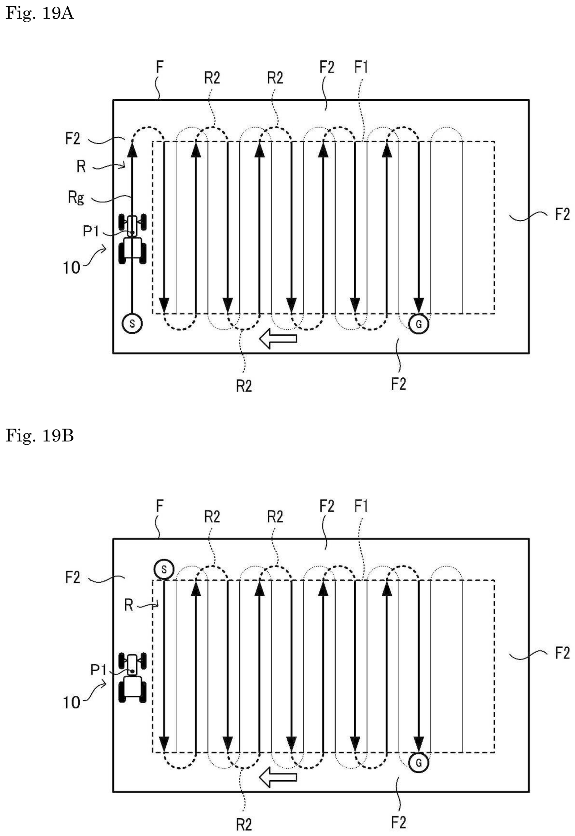

For example, as shown in Fig. 19A, in the case where the correction operation is received in a state where the work vehicle 10 is located in the non-work area F2, when the position of the target path R is corrected (the entire target path R is shifted (translated) to the left) so that the work path closest to the work vehicle 10 passes through the current position P1 of the work vehicle 10, the first work path Rg is moved into the non-work area F2. In this case, the correction processing unit 213 excludes the work path Rg that becomes located in the non-work area F2 from the automatic traveling path. The correction processing unit 213 may delete the work path Rg from the target path R or may invalidate the work path Rg. Consequently, the work vehicle 10 is restrained (prohibited) from automatically traveling along the work path Rg in the non-work area F2.

When the work path Rg is excluded from the automatic traveling path, as shown in Fig. 19B, the correction processing unit 213 may hide the work path Rg and a turning path connected to the work path Rg on the operation terminal 2. That is, on an operation screen to display the target path R, the correction processing unit 213 may cause the work path Rg that becomes located in the non-work area F2 when the position of the target path R is corrected to be hidden, and cause the work paths R1 that become located in the work area F1 when the position of the target path R is corrected to be displayed.

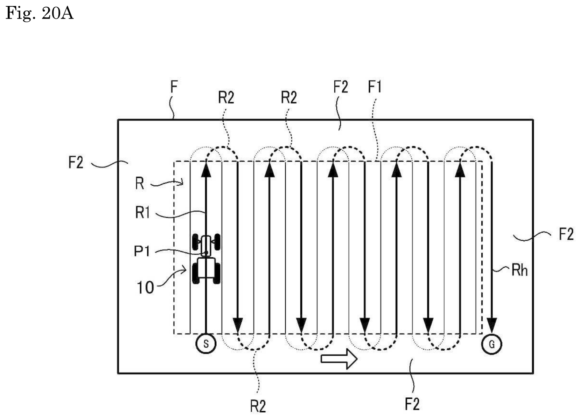

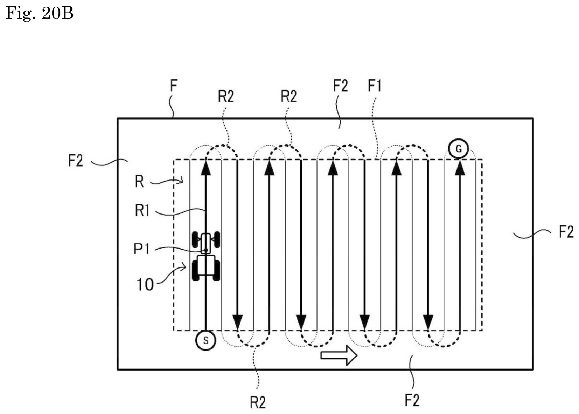

As shown in Fig. 20A, for example, in the case where the correction operation is received in a state where the work vehicle 10 is located in the work area F1, when the position of the target path R is corrected (the entire target path R is shifted (translated) to the right) so that the work path closest to the work vehicle 10 passes through the current position P1 of the work vehicle 10, the last work path Rh is moved into the non-work area F2. In this case, the correction processing unit 213 excludes the work path Rh that becomes located in the non-work area F2 from the automatic traveling path. Consequently, the work vehicle 10 is restrained from automatically traveling along the work path Rh in the non-work area F2. When the work path Rh is excluded from the automatic traveling path, as shown in Fig. 20B, the correction processing unit 213 may hide the work path Rh and a turning path connected to the work path Rh on the operation terminal 2.

In the case where a work path (the work path Rg in Fig. 19A or the work path Rh in Fig. 20A) excluded from the automatic traveling path becomes located in the work area F1 when the correction operation is performed again, the correction processing unit 213 may cause the work path to be returned to the automatic traveling path and displayed on the operation screen. In the case where one of the work paths R1 located in the non-work area F2 is excluded, the correction processing unit 213 may change the work start position S and the work end position G (see Figs. 19B and 20B).

As described above, the path generation method of the present invention includes setting the work area F1 in which to cause the work vehicle 10 to perform work while causing the work vehicle 10 to automatically travel, and the non-work area F2 outside the work area, generating the target path R along which to cause the work vehicle 10 to automatically travel, and correcting the position of the target path R when a correction operation to correct the position of the target path R is received. The path generation method corrects the position of the target path R set in the work area F1 when the correction operation is received. This allows the correction of the position of the target path R along which to cause the work vehicle 10 to automatically travel in the field F including the work area F1 and the non-work area F2. In particular, the position of the target path R set in the work area F1 can be corrected.

### [Additional notes of the invention]

Hereinafter, an outline of the invention extracted from each of the above-described embodiments will be additionally described. Note that configurations and processing functions described in the following additional notes can be selected to be combined as desired.

### <Additional note 1>

A path generation method including:
setting a work area in which to cause a work vehicle to perform work while causing the work vehicle to automatically travel, and a non-work area outside the work area;
generating a target path along which to cause the work vehicle to automatically travel; and
correcting the position of the target path when a correction operation to correct the position of the target path is received.

### <Additional note 2>

The path generation method according to additional note 1, including
correcting the position of the target path when the correction operation is received in a state where the work vehicle is located in the work area.

### <Additional note 3>

The path generation method according to additional note 1 or 2, including
correcting the position of the target path so that among a plurality of work paths included in the target path, one of the work paths closest to a current position of the work vehicle when the correction operation is received passes through the current position.

### <Additional note 4>

The path generation method according to any one of additional notes 1 to 3, including
causing predetermined information to be provided when correction of the position of the target path prevents the work vehicle from automatically traveling at least at any position in the target path.

### <Additional note 5>

The path generation method according to any one of additional notes 1 to 4, including
correcting, among a plurality of work paths included in the target path, the position of a specific one of the work paths that satisfies a predetermined condition.

### <Additional note 6>

The path generation method according to additional note 5, including
correcting, among the plurality of work paths, the position of one of the work paths closest to a current position of the work vehicle when the correction operation is received.

### <Additional note 7>

The path generation method according to additional note 5 or 6, including
correcting, among the plurality of work paths, the position of the work paths associated with traveling direction information of the same direction as the traveling direction of the work vehicle when the correction operation is received.

### <Additional note 8>

The path generation method according to any one of additional notes 5 to 7, including
correcting, among the plurality of work paths, the position of one of the work paths that is closest to a current position of the work vehicle when the correction operation is received, and is associated with traveling direction information of the same direction as the traveling direction of the work vehicle when the correction operation is received.

### <Additional note 9>

The path generation method according to any one of additional notes 1 to 8, in which
the work area includes a plurality of work areas in which different target paths are generated, and
the path generation method includes correcting the position of the target path corresponding to one of the plurality of work areas in which the work vehicle is located when the correction operation is received.

### <Additional note 10>

The path generation method according to any one of additional notes 1 to 9, including
when correction of the position of the target path results in generation of an unworked area in the work area, generating a work path along which to cause the work vehicle to travel in the unworked area.

### <Additional note 11>

The path generation method according to additional note 10, including
determining whether or not to generate the work path along which to cause the work vehicle to travel in the unworked area, based on work information on the work.

### <Additional note 12>

The path generation method according to any one of additional notes 1 to 11, including
correcting the position of the target path within a preset upper limit when the correction operation is received.

### <Additional note 13>

The path generation method according to any one of additional notes 1 to 12, including
excluding, among a plurality of work paths included in the target path, one of the work paths that becomes located in the non-work area when the position of the target path is corrected from a path along which to cause the work vehicle to automatically travel.

### <Additional note 14>

The path generation method according to additional note 13, including
hiding one of the work paths that becomes located in the non-work area when the position of the target path is corrected, and displaying the work paths that become located in the work area when the position of the target path is corrected, on a screen to display the target path. In the path generation method, one or a plurality of processors perform processing according to any one of additional notes 1 to 14.

### <Additional note 15>

A path generation program for causing one or a plurality of processors to perform:
setting a work area in which to cause a work vehicle to perform work while causing the work vehicle to automatically travel, and a non-work area outside the work area;
generating a target path along which to cause the work vehicle to automatically travel; and
correcting the position of the target path when a correction operation to correct the position of the target path is received.

### <Additional note 16>

A path generation system including:
a setting processing unit that sets a work area in which to cause a work vehicle to perform work while causing the work vehicle to automatically travel, and a non-work area outside the work area;
a generation processing unit that generates a target path along which to cause the work vehicle to automatically travel; and
a correction processing unit that corrects the position of the target path when a correction operation to correct the position of the target path is received.

### LIST OF REFERENCE SIGNS

100 Automatic traveling system
10 Work vehicle
11 Vehicle control device
12 Storage unit
13 Traveling unit
14 Working unit
20 Operation terminal
211 Setting processing unit
212 Generation processing unit
213 Correction processing unit
214 Notification processing unit
F Field
F1, F11, F12 Work area
F2 Non-work area
f1 Unworked area
S Work start position
G Work end position
K1 Start button
K2 Shift path button
M1 Error message
P1 Current position
R, R1a, R1b Target path
R1, R11, Ra, Rb Work path
Rm, Rn, Rs, Rt, Ry, r1 Work path
Rg, Rh Work path
R2, Rx Turning path
Re Section

## Claims

1. A path generation method comprising:
setting a work area in which to cause a work vehicle to perform work while causing the work vehicle to automatically travel, and a non-work area outside the work area;
generating a target path along which to cause the work vehicle to automatically travel; and
correcting a position of the target path when a correction operation to correct the position of the target path is received.

2. The path generation method according to claim 1, comprising
correcting the position of the target path when the correction operation is received in a state where the work vehicle is located in the work area.

3. The path generation method according to claim 1, comprising
correcting the position of the target path so that among a plurality of work paths included in the target path, one of the work paths closest to a current position of the work vehicle when the correction operation is received passes through the current position.

4. The path generation method according to claim 1, comprising
causing predetermined information to be provided when correction of the position of the target path prevents the work vehicle from automatically traveling at least at any position in the target path.

5. The path generation method according to claim 1, comprising
correcting, among a plurality of work paths included in the target path, a position of a specific one of the work paths that satisfies a predetermined condition.

6. The path generation method according to claim 5, comprising
correcting, among the plurality of work paths, a position of one of the work paths closest to a current position of the work vehicle when the correction operation is received.

7. The path generation method according to claim 5, comprising
correcting, among the plurality of work paths, a position of the work paths associated with traveling direction information of the same direction as a traveling direction of the work vehicle when the correction operation is received.

8. The path generation method according to claim 5, comprising
correcting, among the plurality of work paths, a position of one of the work paths that is closest to a current position of the work vehicle when the correction operation is received, and is associated with traveling direction information of the same direction as a traveling direction of the work vehicle when the correction operation is received.

9. The path generation method according to claim 1, wherein
the work area includes a plurality of work areas in which different target paths are generated, and
the path generation method comprises correcting the position of the target path corresponding to one of the plurality of work areas in which the work vehicle is located when the correction operation is received.

10. The path generation method according to claim 1, comprising
when correction of the position of the target path results in generation of an unworked area in the work area, generating a work path along which to cause the work vehicle to travel in the unworked area.

11. The path generation method according to claim 10, comprising
determining whether or not to generate the work path along which to cause the work vehicle to travel in the unworked area, based on work information on the work.

12. The path generation method according to claim 1, comprising
correcting the position of the target path within a preset upper limit when the correction operation is received.

13. The path generation method according to claim 1, comprising
excluding, among a plurality of work paths included in the target path, one of the work paths that becomes located in the non-work area when the position of the target path is corrected from a path along which to cause the work vehicle to automatically travel.

14. The path generation method according to claim 13, comprising
hiding one of the work paths that becomes located in the non-work area when the position of the target path is corrected, and displaying the work paths that become located in the work area when the position of the target path is corrected, on a screen to display the target path.

15. A path generation program for causing one or a plurality of processors to perform:
setting a work area in which to cause a work vehicle to perform work while causing the work vehicle to automatically travel, and a non-work area outside the work area;
generating a target path along which to cause the work vehicle to automatically travel; and
correcting a position of the target path when a correction operation to correct the position of the target path is received.

16. A path generation system comprising:
a setting processing unit that sets a work area in which to cause a work vehicle to perform work while causing the work vehicle to automatically travel, and a non-work area outside the work area;
a generation processing unit that generates a target path along which to cause the work vehicle to automatically travel; and
a correction processing unit that corrects a position of the target path when a correction operation to correct the position of the target path is received.
